# FASCICULE DE BREVET EUROPEEN

(11) **EP 3 426 912 B1**
(45) Date de publication et mention de la délivrance du brevet: **16.11.2022**
(21) Numéro de dépôt: 17710781.0
(22) Date de dépôt: 24.02.2017
(51) Int. Cl.: F02P 5/152, F02P 5/12, F02P 5/15, F02D 41/14

(54) **MÉTHODE DE DÉTERMINATION D'UNE CORRECTION PRÉVENTIVE D'AVANCE À L'ALLUMAGE D'UN MOTEUR À COMBUSTION INTERNE À ALLUMAGE COMMANDÉ**
VERFAHREN ZUR BESTIMMUNG EINER PRÄVENTIVEN KORREKTUR DER ZÜNDVORVERSTELLUNG EINES VERBRENNUNGSMOTORS MIT FREMDZÜNDUNG
A METHOD FOR DETERMINING AN INTIAL IGNITION ADVANCE CORRECTION OF A SPARK-IGNITION INTERNAL COMBUSTION ENGINE

(30) Priorité: 10.03.2016 FR 1651999
(43) Date de publication de la demande: 16.01.2019
(73) Titulaire: PSA Automobiles SA, 78300 Poissy (FR)
(72) Inventeur: CHARRIER, Jean Louis, 44400 REZÉ (FR); BRENOT, Sebastien, 25310 HERIMONCOURT (FR); QUIE, Philippe, 77000 MELUN (FR)
(86) Numéro de dépôt international: PCT/FR2017/050414
(87) Numéro de publication internationale: WO 2017/153659

(56) Documents cités:
- EP-A1- 2 787 206
- EP-A2- 1 104 850
- US-A- 6 161 523
- US-A1- 2011 162 620
- US-A1- 2012 227 716

## Description

L'invention a trait au réglage des moteurs à combustion interne à allumage commandé, et plus précisément à la stratégie visant à protéger un moteur du phénomène de cliquetis.

Un moteur à combustion interne à allumage commandé est alimenté, lors de chaque cycle (à deux ou à quatre temps), par un mélange comprenant de l'air et du carburant (mélange air/carburant).

Sera pris en compte, ci-après, le cas d'un moteur à quatre temps, comprenant au moins un cylindre et un piston mobile dans le cylindre, chaque cycle comprenant quatre temps, ci-après nommés phases (admission, compression, combustion-détente, échappement), la phase de combustion-détente étant initiée par l'allumage du mélange air/carburant comprimé, via une bougie d'allumage, contrôlée par un calculateur moteur (ou contrôle moteur).

Afin d'optimiser les performances du moteur, tant en terme de puissance qu'en terme de consommation, l'allumage est déclenché en amont d'une position extrême dite « point mort haut » (PMH) du piston dans le cylindre, à l'issue de la phase de compression.

Afin de pouvoir régler l'allumage, les motoristes utilisent un paramètre appelé avance à l'allumage, correspondant à un décalage entre l'instant d'allumage et l'instant du passage du piston en position point mort haut (PMH), la position point mort haut (PMH) étant la position de référence.

L'avance à l'allumage est matérialisée par un écart angulaire (ou angle de rotation) ayant pour référentiel un vilebrequin, via des bielles, par le mouvement des pistons du moteur.

Les moteurs à allumage commandé sont soumis au cliquetis, phénomène d'auto-inflammation connu des motoristes, engendrant la combustion spontanée à contretemps d'une partie du mélange air/carburant, indépendamment de l'étincelle de la bougie d'allumage.

Le cliquetis peut provoquer des nuisances sonores au sein de l'habitacle, une dégradation accélérée des éléments moteur (notamment des pistons) ou encore une augmentation de la consommation de carburant.

L'apparition du cliquetis est attribuable à différents facteurs, comme par exemple la charge du moteur, définissant le rapport entre la quantité d'air admise dans le cylindre du moteur et la quantité d'air admissible de référence. Si le rapport est égal à 0, le moteur est vide. Si le rapport est égal à 1, le moteur est en pleine charge atmosphérique. Si le rapport est supérieur à 1, le moteur admet plus d'air que la référence théorique, la température dans le cylindre augmente et rend le mélange air-carburant plus sensible à une auto-inflammation, avant le déclenchement de l'étincelle générée par l'allumage.

Afin d'éviter le cliquetis, il est connu d'appliquer une action curative immédiate, dont l'effet est de réduire la valeur de l'avance à l'allumage sur le cylindre concerné par une détonation, ou d'appliquer une action préventive à évolution plus lente appliquée sur tous les cylindres.

Une correction de type auto adaptative enregistre la valeur de la correction moyenne, pour chacun des cylindres, en fonction des conditions de vitesse (régime moteur) et de charge du moteur.

En forte charge, on applique un enrichissement du mélange, qui est fonction du retrait d'avance à l'allumage, ce qui a pour effet de retarder l'apparition du cliquetis en refroidissant le mélange.

Cependant, l'évolution des normes anti-pollution provoque l'apparition de nouveaux systèmes de dépollution, tels que des filtres à particules, en particulier sur les moteurs à essence suralimentés, notamment de type essence turbo à injection directe.

Le principe du filtre à particules consiste à contenir les suies issues de la combustion, puis à les brûler lors de la phase de régénération du filtre.

Lors du fonctionnement du filtre à particules, une contre-pression se crée dans le circuit d'échappement. Cette contre-pression ralentit l'évacuation des gaz brûlés lors de la phase d'échappement du moteur, et augmente le taux de gaz résiduels dans le cylindre.

Ces gaz ont une température élevée et ont tendance à réchauffer le mélange d'air et de carburant lors de la combustion suivante, et ont ainsi tendance à favoriser l'apparition de cliquetis.

On connait du document US 20070180824 une méthode de contrôle d'un système moteur comprenant un moteur à allumage commandé et un filtre à particules, la méthode permettant de diminuer le taux de gaz résiduels dans le cylindre dû à une contre-pression dans le circuit d'échappement, par l'ouverture de la tuyère d'une turbine à géométrie variable. L'ouverture de cette tuyère va permettre d'augmenter le débit d'air d'admission, de sorte à empêcher la montée en pression dans le passage d'échappement.

Cependant, cette méthode de l'art antérieur présente l'inconvénient de ne pas cibler directement le filtre à particules comme principale source de l'apparition de cliquetis. En effet, cette méthode ne permet pas d'ajuster la valeur de l'avance à l'allumage en fonction du taux d'encrassement du filtre à particules.

Un premier objectif est de proposer une méthode de contrôle d'un moteur à combustion interne à allumage commandé comprenant un filtre à particules, cette méthode et permettant de surveiller le taux d'encrassement du filtre à particules.

Un deuxième objectif est de proposer une méthode de contrôle d'un moteur à combustion interne à allumage commandé comprenant un filtre à particules, cette méthode permettant d'ajuster la valeur de l'avance à l'allumage en fonction de la charge du moteur, de son régime et du taux d'encrassement du filtre à particules.

À ces fins, il est proposé, en premier lieu, une méthode de contrôle d'un moteur à combustion interne à allumage commandé selon la revendication 1.

Selon l'invention, une telle méthode permet de prévenir l'apparition de cliquetis dans un moteur à combustion interne à allumage commandé, en fonction du régime moteur et de sa charge.

La méthode permet également de surveiller l'état d'encrassement du filtre à particules.

Avantageusement, le facteur de chargement du moteur est compris pour un taux de balayage donné entre 0 pour un état du filtre à particules non encrassé et 1 pour un état du filtre à particules colmaté.

Il est proposé, en deuxième lieu, un calculateur selon la revendication 3.

Il est proposé, en troisième lieu, un moteur comprenant un filtre à particules, au moins une bougie d'allumage et un tel calculateur.

Il est proposé, en quatrième lieu, un véhicule automobile comprenant un tel moteur.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective de dessus d'un véhicule automobile comprenant un moteur à combustion interne à allumage commandé,
- la figure 2 est une vue schématique d'un moteur à combustion interne à allumage commandé et de ses auxiliaires de pilotage,
- la figure 3 est un graphique illustrant un différentiel de pression aux bornes d'un filtre à particules, en fonction d'un débit d'échappement de gaz et d'un chargement du filtre à particules,
- la figure 4 est un graphique illustrant une correction d'avance à l'allumage, en fonction du différentiel de pression aux bornes du filtre à particules,
- la figure 5 est un diagramme de fonctionnement d'une méthode de contrôle du moteur de la figure 2.

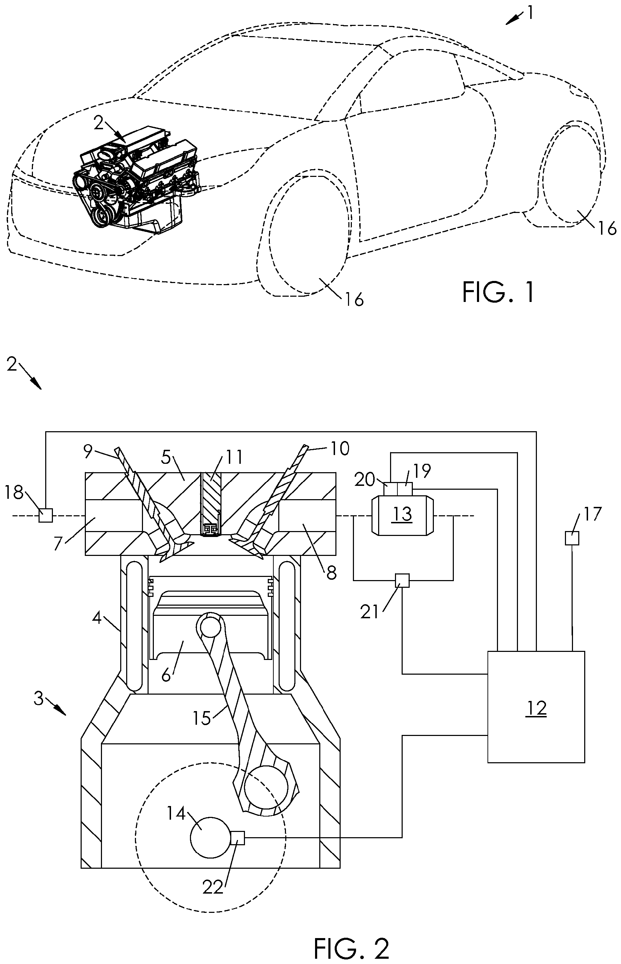

Sur la figure 1 est représenté un véhicule **1** automobile pourvu d'un moteur **2** à combustion interne à allumage commandé.

Le moteur **2** comprend un bloc **3** moteur ayant au moins un cylindre **4,** une culasse **5** recouvrant le bloc **3** moteur et fermant le cylindre **4** à une extrémité supérieure de celui-ci, et un piston **6** monté mobile dans le cylindre **4** entre une position haute, dans laquelle le piston **6** est à proximité de la culasse **5,** et une position basse écartée de la position haute.

La culasse **5** comprend deux conduits **7, 8** débouchant dans le cylindre **4,** à savoir un conduit **7** d'admission d'un mélange air/carburant et un conduit **8** d'échappement de ce mélange après combustion, les conduits **7, 8** comprenant respectivement, à leur jonction avec le cylindre **4,** une soupape **9** et **10** permettant la mise en communication d'un conduit **7** et **8** avec le cylindre **4** ou au contraire la séparation entre le conduit **7** et **8** et le cylindre **4.**

En outre, la culasse **5** comprend, entre les deux soupapes **9, 10,** une bougie **11** d'allumage pour déclencher la combustion du mélange air/carburant dans le cylindre **4.**

Avantageusement, le moteur **2** comprend plusieurs cylindres **4.** Cependant, à des fins de clarté, le moteur **2** illustré sur la figure 2 est représenté de manière schématique ; seuls le bloc moteur, et plus précisément un des cylindres **4** et la culasse **5** sont représentés en section.

Comme on voit sur la figure 2, le moteur **2** comprend un calculateur **12,** un filtre **13** à particules, un vilebrequin **14** entrainé en rotation, via des bielles **15** par le piston **6.** Le mouvement du vilebrequin **14** est ensuite transmis aux roues **16** du véhicule **1** automobile.

Le moteur **2** comprend également plusieurs capteurs et sondes, connectés au calculateur **12,** à savoir :
- un capteur **17** de régime moteur **Nₘₒₜ**,
- un capteur **18** de pression absolue, comprenant une sonde de température, disposée à l'admission et permettant de mesurer la pression dans la tubulure d'admission et la température de l'air, ces deux mesures associées à la mesure du régime moteur **Nₘₒₜ** permettent au calculateur **12** d'évaluer la quantité d'air admise dans le cylindre **4,** cette quantité d'air étant communément désignée charge **R,**
- une sonde **19** lambda, disposée en amont du filtre **13** à particules, permettant de mesurer la quantité d'air dans le circuit d'échappement,
- une sonde **20** de température, disposée en amont du filtre **13** à particules, permettant de mesurer la température de l'air dans le circuit d'échappement, la mesure de la quantité d'air mesurée à l'échappement associée à la mesure de la température de l'air à l'échappement permettant au calculateur **12** d'évaluer la quantité d'air frais admise dans le cylindre **4** qui est directement envoyé à l'échappement, cette quantité d'air étant communément désignée taux balayage **Tₓ**,
- un capteur **21** de pression, permettant de mesurer le différentiel **dP** de pression entre l'entrée et la sortie du filtre **13** à particules,
- un capteur **22** de référence cylindrique (ou capteur à effet Hall), permettant au calculateur de diminuer l'avance à l'allumage **A.**

Lors d'un cycle moteur, l'allumage du mélange air/carburant, via la bougie **11** d'allumage, se produit en amont de la position point mort haut (PMH) du piston **6** à l'issue de la phase de compression. Afin de calibrer l'allumage, les motoristes définissent un paramètre appelé avance à l'allumage, correspondant à un écart angulaire (exprimé par exemple en degrés), ayant pour référentiel le vilebrequin **14,** entre l'instant de l'allumage et l'instant du passage du piston **6** en position point mort haut (PMH), la position point mort haut (PMH) du piston **6** correspondant à la position de référence.

Le calculateur **12** permet, comme nous le verrons ci-après, de commander l'allumage de la bougie **11** d'allumage pour déclencher la combustion.

Le filtre **13** à particules est un système de filtration utilisé pour contenir les suies issues de la combustion. Les particules piégées par le filtre **13** sont ensuite brulées lors d'une phase de régénération du filtre **13** à particules. La régénération du filtre **13** à particules, lorsqu'elle est effectuée par voie thermique, consiste à bruler les particules en portant les gaz d'échappement à haute température, par exemple 700°C. Un balayage de l'air d'admission vers l'échappement apporte, par exemple, de l'oxygène dans le filtre à particules.

Le fonctionnement du filtre à particules provoque une contre-pression dans le circuit d'échappement. Cette contre-pression ralentit l'évacuation des gaz brûlés lors de la phase d'échappement du moteur et augmente le taux de gaz résiduels dans le cylindre.

Ces gaz ont tendance à réchauffer le mélange d'air et de carburant lors de la combustion suivante, et ont ainsi tendance à favoriser l'apparition de cliquetis.

Le cliquetis est un phénomène associé à une combustion anormale dans les moteurs à allumage commandé, lié à l'apparition d'ondes de choc dans la chambre de combustion du moteur. Ce phénomène est typiquement attribué à l'auto-inflammation de particules de carburant imbrûlées qui sont repoussées vers les parois de la chambre de combustion par le souffle du front de flamme généré normalement au niveau de l'arc électrique (étincelle) de la bougie d'allumage. Suite à l'élévation de la température et de la pression, ces particules peuvent s'auto-enflammer et provoquer des ondes de choc susceptibles d'endommager les pistons, les segments ou même les cylindres, et donc provoquer une casse moteur. Pour une architecture de moteur et un taux de compression donnés, le cliquetis va essentiellement dépendre de l'avance à l'allumage, c'est-à-dire de l'angle de rotation du volant moteur qui sépare l'instant d'étincelle du point mort haut et de la limite d'auto-inflammation du carburant.

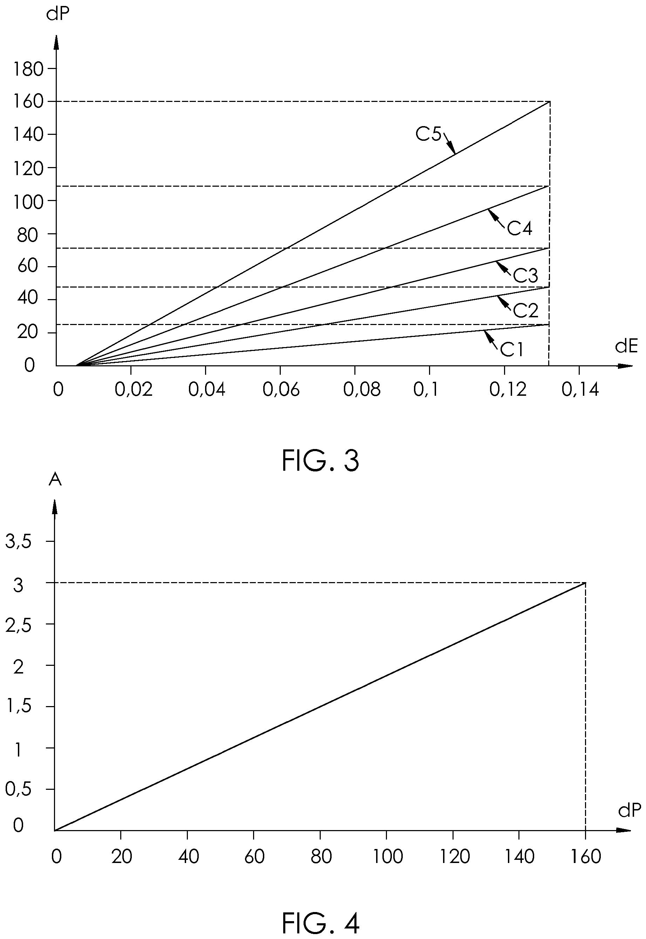

La figure 3 illustre un graphique dont l'ordonnée représente un différentiel **dP** de pression mesuré aux bornes du filtre **13** à particules (exprimé en mbar), et l'abscisse représente le débit **dE** d'échappement des gaz d'échappement (exprimé en kg/s).

Le graphique comprend plusieurs courbes **C1, C2, C3, C4** et **C5** représentant l'évolution du chargement en suies du filtre **13** à particules en fonction du différentiel **dP** de pression et du débit **dE** d'échappement des gaz d'échappement, **C1** représentant un chargement faible en suies et **C5** représentant un chargement important en suies (filtre **13** à particules colmaté).

On remarque que lorsque le chargement en suies dans le filtre **13** à particules est important et lorsque le débit d'échappement augmente au fur et à mesure que la soupape **10** d'échappement s'ouvre pour évacuer les gaz d'échappement, le différentiel **dP** de pression mesuré aux bornes du filtre **13** à particules augmente.

Cette augmentation de pression témoigne du bouchon créé dans le filtre **13** à particules.

La figure 4 illustre un graphique dont l'ordonnée représente la correction d'avance à l'allumage **A** nécessaire pour éviter le phénomène de cliquetis (exprimé en degrés), et l'abscisse représente le différentiel **dP** de pression mesuré aux bornes du filtre **13** à particules (exprimé en mbar).

On constate sur ce graphique une évolution linéaire de la correction d'avance à l'allumage **A,** nécessaire par rapport au différentiel **dP** de pression mesuré aux bornes du filtre **13** à particules (et donc par rapport au chargement du filtre **13** à particules).

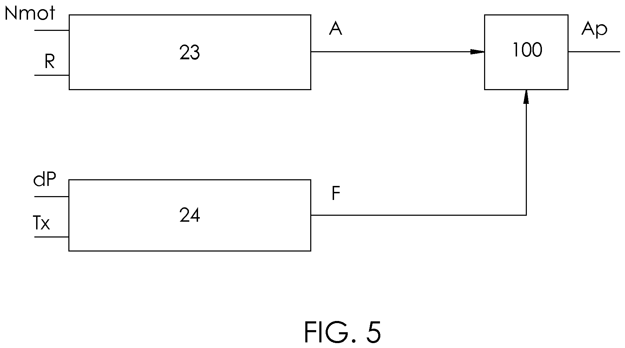

Le diagramme de fonctionnement présenté en figure 5 décrit les différentes phases permettant au calculateur **12** de déterminer une correction préventive d'avance à l'allumage **Aₚ** du moteur **2.**

La correction préventive d'avance à l'allumage **Aₚ** est déterminée à l'aide de deux cartographies de commande **23, 24,** gérées par le calculateur **12.**

Des paramètres de commande définissant les relations entre variables de sortie et variables d'entrée sont associés au calculateur **12** et sont globalement désignés sous par cartographie de commande.

La première cartographie de commande **23** est associée à deux variables d'entrée, le régime moteur **Nₘₒₜ**, c'est-à-dire la vitesse de rotation du moteur **2,** et la charge **R** du moteur **2,** la charge **R** du moteur **2** étant définie par le rapport entre la quantité d'air admise dans le cylindre du moteur **2** et la quantité d'air admissible de référence. Une correction d'avance à l'allumage **A** est obtenue par interpolation des deux variables dans une matrice.

La seconde cartographie de commande **24** est associée à deux variables d'entrée, le différentiel **dP** de pression mesuré aux bornes du filtre **13** à particules et le taux de balayage **Tₓ** du moteur **2,** le taux de balayage **Tₓ** du moteur **2** étant défini par la quantité de gaz introduite à l'admission qui est directement envoyée à l'échappement.

Le taux de balayage **Tₓ** est un phénomène généré par des déphaseurs de cames, qui permettent de retarder la fermeture de la soupape **10** d'échappement alors que la soupape **9** d'admission est ouverte, ainsi, les gaz provenant de l'admission sont directement envoyés à l'échappement.

Un facteur **F** de chargement du filtre **13** à particules est obtenu par interpolation des deux variables citées ci-dessus dans une matrice. Ce facteur **F** est compris entre 0 et 1, et définit le taux d'encrassement du filtre **13** à particules pour un taux de balayage **Tₓ** donné.

Par exemple, pour un filtre **13** à particules non encrassé, le calculateur **12** détermine un facteur **F** égal à 0.

Pour un filtre **13** à particules très encrassé et un taux de balayage **Tₓ** élevé, le calculateur **12** détermine un facteur **F** égal à 0,80.

Pour un filtre **13** à particules très encrassé et un taux de balayage **Tₓ** faible, le calculateur **12** détermine un facteur **F** égal à 0,60.

La correction d'avance à l'allumage **A** est effectuée par le calculateur **12** lors d'une phase **100** par le facteur **F** de chargement, il en résulte la correction préventive d'avance à l'allumage **Aₚ**.

La méthode décrite ci-dessus présente plusieurs avantages.

Elle permet de surveiller le différentiel de pression aux bornes d'un filtre à particules.

Elle permet de surveiller le taux de balayage d'un moteur à combustion interne à allumage commandé.

Elle permet d'établir une correction préventive d'avance à l'allumage, en fonction du taux d'encrassement d'un filtre à particules, ce taux étant déterminé par le différentiel de pression aux bornes du filtre à particules et par le taux de balayage du moteur.

## Revendications

1. Méthode de contrôle d'un moteur **(2)** à combustion interne à allumage commandé définissant un régime moteur (**Nₘₒₜ**), une charge **(R)** et un taux de balayage (**Tₓ**), pour éviter l'apparition de cliquetis dans un cylindre **(4)** du moteur **(2),** le moteur **(2)** comprenant :
- un filtre **(13)** à particules, et
- un calculateur **(12)**
laquelle méthode établit une correction d'avance à l'allumage **(A)** en fonction du régime moteur (**Nₘₒₜ**) et de la charge **(R),**
la méthode étant **caractérisée en ce qu'un** facteur **(F)** de chargement du filtre **(13)** à particules est établi en fonction d'un différentiel **(dP)** de pression mesuré aux bornes du filtre **(13)** à particules et du taux de balayage (**Tₓ**) du moteur **(2),** et qu'une correction préventive d'avance à l'allumage (**Aₚ**) nécessaire pour éviter le phénomène de cliquetis est calculée lors d'une phase **(100)** dans laquelle la correction d'avance à l'allumage **(A)** est multipliée au facteur **(F)** de chargement, la correction préventive d'avance à l'allumage (**Aₚ**) étant alors effectuée par le calculateur.

2. Méthode selon la revendication 1, **caractérisée en ce que** le facteur **(F)** de chargement du moteur **(2)** est compris pour un taux de balayage (**Tₓ**) donné entre 0 pour un état du filtre **(13)** à particules non encrassé et 1 pour un état du filtre **(13)** à particules colmaté.

3. Calculateur **(12)** configuré pour réaliser une méthode de contrôle du moteur (2) selon l'une des revendications précédentes et ayant les moyens de calculer
puis d'effectuer la correction préventive d'avance à l'allumage (**Aₚ**) d'une bougie **(11)** d'allumage de moteur **(2)** à combustion interne à allumage commandé comprenant un filtre à particules.

4. Moteur **(2)** comprenant un filtre à particules, au moins une bougie **(11)** d'allumage, et un calculateur **(12)** selon la revendication 3. 3 et les capteurs nécessaires à la méthode selon l'une des revendications 1 ou 2.

5. Véhicule (1) automobile comprenant un moteur **(2)** selon la revendication 4.

## Patentansprüche

1. Verfahren zum Steuern eines fremdgezündeten Verbrennungsmotors **(2),** das eine Motordrehzahl (**Nₘₒₜ**), eine Last **(R)** und eine Spülrate (**Tₓ**) definiert, um das Auftreten von Klopfen in einem Zylinder **(4)** des Motors zu verhindern **(2),** wobei der Motor **(2)** umfasst :
- einen Partikelfilter **(13)** und
- ein Taschenrechner **(12)**
welches Verfahren eine Frühzündungskorrektur **(A)** in Abhängigkeit von Motordrehzahl (**Nₘₒₜ**) und Last **(R)** ermittelt,
wobei das Verfahren **dadurch gekennzeichnet ist, dass** ein Beladungsfaktor **(F)** des Partikelfilters **(13)** als Funktion einer an den Anschlüssen des Partikelfilters **(13)** gemessenen Druckdifferenz **(dP)** und der Spülrate (**Tₓ**) ermittelt wird. des Motors **(2),** und dass eine zur Vermeidung des Klopfphänomens notwendige präventive Vorzündungskorrektur (**Aₚ**) während einer Phase **(100)** berechnet wird, in der die Vorzündungskorrektur bei Zündung **(A)** mit dem Belastungsfaktor **(F)** multipliziert wird, wobei dann die vorbeugende Frühzündungskorrektur (**Aₚ**) vom Rechner durchgeführt wird.

2. Verfahren nach Anspruch 1, **dadurch gekennzeichnet, dass** der Belastungsfaktor **(F)** des Motors **(2)** für eine gegebene Spülrate (**Tₓ**) zwischen 0 für einen Zustand des nicht verstopften Partikelfilters **(13)** und 1 für einen Zustand des Partikelfilters **(13)** liegt Partikelfilter verstopft.

3. Computer **(12),** der konfiguriert ist, um ein Verfahren zum Steuern des Motors **(2)** nach einem der vorhergehenden Ansprüche auszuführen, und der die Mittel zum Berechnen und anschließenden Durchführen der präventiven Korrektur des Vorzündens (**Aₚ**) d einer Zündkerze **(11)** für einen Otto- Verbrennungsmotor **(2)** mit Partikelfilter.

4. Motor **(2)** umfassend einen Partikelfilter, mindestens eine Zündkerze **(11)** und einen Rechner **(12)** nach Anspruch 3 und die für das Verfahren nach einem der Ansprüche 1 oder 2 erforderlichen Sensoren.

5. Kraftfahrzeug **(1)** mit einem Motor **(2)** nach Anspruch 4.

## Claims

1. Method for controlling a spark-ignition internal combustion engine **(2)** defining an engine speed (**Nₘₒₜ**), a load **(R)** and a scavenging rate (**Tₓ**), to prevent the appearance of knocking in a cylinder **(4)** of the engine **(2),** the engine **(2)** comprising :
- a particle filter **(13),** and
- a calculator **(12)**
which method establishes an ignition advance correction **(A)** as a function of engine speed (**Nₘₒₜ**) and load **(R),**
the method being **characterized in that** a loading factor **(F)** of the particle filter **(13)** is established as a function of a pressure differential **(dP)** measured at the terminals of the particle filter **(13)** and of the scanning rate (**Tₓ**) of the engine **(2),** and that a preventive ignition advance correction (**Aₚ**) necessary to avoid the knocking phenomenon is calculated during a phase **(100)** in which the correction of ignition advance **(A)** is multiplied by the loading factor **(F),** the preventive ignition advance correction (**Aₚ**) then being carried out by the computer.

2. Method according to claim 1, **characterized in that** the engine **(2)** loading factor **(F)** is comprised for a given scanning rate (**Tₓ**) between 0 for a state of the filter **(13)** with particles not clogged and 1 for a clogged particle filter **(13)** state.

3. Computer **(12)** configured to carry out a method of controlling the engine **(2)** according to one of the preceding claims and having the means of calculating and then carrying out the preventive correction of ignition advance (**Aₚ**) d a spark plug **(11)** for a spark-ignition internal combustion engine **(2)** comprising a particulate filter.

4. Engine **(2)** comprising a particulate filter, at least one spark plug **(11),** and a computer **(12)** according to claim 3 and the sensors necessary for the method according to one of claims 1 or 2.

5. Motor vehicle **(1)** comprising an engine **(2)** according to claim 4.
